# EUROPEAN PATENT APPLICATION

(11) **EP 2 639 987 A2**
(43) Date of publication of application: **18.09.2013**
(21) Application number: 12180673.1
(22) Date of filing: 16.08.2012
(51) Int. Cl.: H04L 1/18

(54) **Method and apparatus for scheduling information transmission**

(30) Priority: 16.03.2012 US 201261611935 P
(71) Applicant: BlackBerry Limited, Waterloo ON N2L 3W8 (CA)
(72) Inventor: Ekici, Ozgur, Escondido, CA California 92025 (US)
(74) Representative: Bryn-Jacobsen, Caelia

(57) **Abstract**

A method and apparatus for scheduling data transmission, during error control operation, in which data is scheduled dependent upon satisfying a criterion relating to a characteristic of the error control operation.

## Description

### BACKGROUND

### TECHNICAL FIELD

This application relates to scheduling information transmission. In particular, the application relates to a method and apparatus in a telecommunication system for optimizing scheduling of scheduling information transmission, in Hybrid Automatic Repeat reQuest, Enhanced Dedicated Channel Operation; HARQ E-DCH.

### DESCRIPTION OF THE RELATED ART

In a typical wireless cellular radio system, user equipment (UE), or a 'device', communicates via one or more radio access networks (RANs) to one or more core networks. User equipment (UE) comprises various types of equipment such as mobile telephones (also known as cellular or cell phones, including smart phones), laptops with wireless communication capability, personal digital assistants (PDAs) etc. These may be portable, hand held, pocket sized, installed in a vehicle etc and communicate voice and/or data signals with the radio access network.

W-CDMA (Wideband Code Division Multiple Access) is a radio interface for IMT-2000 (International Mobile Communication), for use as a wireless mobile telecommunication system. The European version of IMT-2000 is UMTS (Universal Mobile Telecommunication System).

In the following, reference may be made to E-UTRAN (e.g. LTE), UTRAN (e.g. UMTS) and GERAN. Various standardization bodies are known to publish specifications/standards and set standards for mobile telecommunication systems. For instance, the 3GPP (Third Generation Partnership Project) has been known to publish specifications/standards and/or set standards for mobile telecommunications such as UMTS. Reference will be made here to particular "Standards". However it should be understood that the invention is not intended to be limited to any particular mobile telecommunications system.

A typical radio access network covers a geographical area typically having a plurality of cell areas. Each cell area is served by at least one base station, which in UMTS and LTE may be referred to as a Node B and enhanced-Node B (eNB) respectively. The base stations communicate at radio frequencies over an air interface with the UEs within range of the base station. Several base stations may be connected to a radio network controller (RNC), in UTRAN systems, which controls various activities of the base stations. The radio network controllers are typically connected to a core network.

A dedicated channel DCH for downlink and uplink have been defined in Standard releases. High speed packet access (HSUPA) protocols have been proposed to improve the performance of uplink dedicated transport channels, i.e. to increase capacity and throughput and reduce delay. A 3GPP term for HSUPA is Enhanced Uplink (EUL), for instance.

HSUPA uses a packet scheduler, and operates on a request-grant principle where the UEs request a permission to send data and the scheduler decides when and how many UEs will be allowed to do so. A request for transmission contains data about the state of the transmission buffer and the queue at the UE and its available power margin.

In addition to this scheduled mode of transmission the standards also allows a self-initiated transmission mode from the UEs, denoted "non-scheduled". The non-scheduled mode can, for example, be used for VoIP (voice over internet protocol) services for which even the reduced transmission time interval, TTI, and the Node B based scheduler will not be able to provide the very short delay time and constant bandwidth required.

HSUPA introduces various channels at the physical layer, including E-AGCH (Absolute Grant Channel), E-RGCH (Relative Grant Channel), F-DPCH (Fractional-DPCH), E-DPCCH (E-DCH Dedicated Physical Control Channel) and E-DPDCH (E-DCH Dedicated Physical Data Channel). E-DCH Dedicated Physical Control Channel, amongst E-DPDCH is used to carry the E-DCH Transport Channel.

HSUPA uses the uplink enhanced dedicated channel E-DCH on which it employs link adaptation methods such as
- shorter Transmission Time Interval TTI enabling faster link adaptation; and use of certain error minimizing processes, to make retransmissions more effective.
- use of certain error minimizing processes, such as HARQ (hybrid ARQ) with incremental redundancy making retransmissions more effective.

Various error control methods are known for data transmission. For example, Automatic Repeat reQuest (ARQ), also known as Automatic Repeat Query, is an error-control method for data transmission that uses acknowledgements (messages sent by the receiver indicating that it has correctly received a data frame or packet) and timeouts (specified periods of time allowed to elapse before an acknowledgment is to be received) to achieve reliable data transmission over an unreliable service. If the sender does not receive an acknowledgment before the timeout, it usually re-transmits the frame/packet until the sender receives an acknowledgment or exceeds a predefined number of re-transmissions.

During E-DCH operation, an error control method that may be adopted is the Hybrid automatic repeat request (Hybrid ARQ or HARQ), with incremental redundancy for example to make retransmissions more effective. In standard ARQ, redundant bits are added to data to be transmitted using an error-detecting code such as cyclic redundancy check (CRC). In Hybrid ARQ, a code is used that can perform both forward error correction (FEC) in addition to error detection (ED) to correct a subset of all errors while relying on ARQ to correct errors that are uncorrectable using only the redundancy sent in the initial transmission. HARQ performs better than ordinary ARQ in poor signal conditions, but in its simplest form this comes at the expense of significantly lower throughput in good signal conditions.

Section 11.8.1 relates to control of E-DCH transmission and reception, for UE operation. 11.8.1.1.1 relates to HARQ operation, and the HARQ entity as follows:

Section 11.8.1.6 relates to Scheduling information reporting, and reads as follows: *Scheduling information reports will be triggered differently depending on the value of the variable Grant_Available in the Serving Grant Update function. The triggering of a report shall be indicated to the E-TFC selection function at the first new transmission opportunity (this process may be delayed in case the HARQ processes are occupied with re-transmissions). Even if multiple events are triggered by the time a new transmission can take place, only a single scheduling information header will be included in the payload.*

A Hybrid Automated Repeat reQuest (HARQ) process can be allocated for certain Radio Bearers (RBs), where an RB is a set of properties related to data transmission. A subset of RBs is the signalling Radio Bearers, SRBs, that are radio bearers that carries DCCH signalling data, such as RB2.

In WCDMA/UMTS systems, for example, during for instance Enhanced Dedicated Channel (E-DCH) operation, if Scheduling Information (SI) is being transmitted on the Hybrid Automated Repeat reQuest (HARQ) process that is allocated for Signalling Radio Bearer (SRB), it may experience retransmission. This can delay time critical uplink SRB message transmission.

There are proposed strategies for a method and apparatus in mobile telecommunications system for scheduling information transmission. A number of such strategies are detailed below.

Other aspects and features of the proposed strategy will become apparent to those ordinarily skilled in the art upon review of the following description of specific embodiments of an apparatus and method in mobile telecommunications system user equipment.

### BRIEF DESCRIPTION OF THE DRAWINGS

Embodiments will now be described, by way of example only, with reference to the attached drawings, in which:
Figure 1 illustrates a first technique in mobile telecommunications system user equipment;
Figure 2 shows an overview of a network and a user equipment device;
Figure 3 is a block diagram illustrating an embodiment of a protocol stack apparatus provided with a RRC block, in accordance with the present application;
Figure 4 is a block diagram illustrating a mobile device, which can act as a UE and co-operate with the apparatus and method of Figure 1.

The same reference numerals are used in different figures to denote similar elements.

### DETAILED DESCRIPTION OF THE DRAWINGS

An apparatus and method for scheduling information transmission is described. In the following description, for the purposes of explanation, numerous specific details are set forth in order to provide a thorough understanding of the present invention. It will be apparent, however, to one skilled in the art that the technique may be practised without these specific details. In other instances, well-known structures and devices are shown in block diagram form in order to avoid unnecessarily obscuring the present invention.

The needs identified in the foregoing Background, and other needs and objects that will become apparent from the following description, are achieved by, in one aspect, a method and apparatus for scheduling information transmission.

In one aspect, there is a method for scheduling data transmission, the transmission comprising an error control process, the method comprising, in a user equipment: scheduling data transmission on the error control process if a criterion is satisfied dependent on a radio bearer allocation of the error control process.

Preferably, the data comprises scheduling data. Preferably, the transmission is part of a High Speed Uplink Packet Access (HSUPA) operation, on an uplink enhanced dedicated channel, E-DCH. Preferably, the error control process comprises a Hybrid Automated ReQuested, HARQ, process. The criterion may comprise the error control process not being allocated to a signalling radio bearer, SRB.

Preferably the error control process is allocated dependent upon an information element, IE, ms2 NonSchedTransmGrantHARQAlloc, received in a control message. Preferably the criterion is satisfied is determined from an IE ms2 NonSchedTransmGrantHARQAlloc, received in a control message. Preferably multiple Radio Bearers are mapped on to a same transport channel on an uplink.

In one aspect there is a wireless telecommunications device comprising: a processor; and a memory having stored therein one or more routines executable by the processor, the one or more routines being adapted to operate according to a method described herein. In one aspect there is a computer-readable medium having computer-executable instructions adapted to cause a device to perform a method described herein.

In other aspects, the invention encompasses apparatus and a computer-readable medium configured to carry out the foregoing actions, as well as a data carrier carrying thereon or therein data indicative of instructions executable by processing means to cause those means to carry out the foregoing actions. Examples are CD-ROMs, memory sticks, dongles, transmitted signals, downloaded files etc. In particular, the method may be implemented in a mobile telecommunications device, with or without voice capabilities, or other electronic devices such as handheld or portable devices.

### Overview

In WCDMA/UMTS systems, during for instance Enhanced Dedicated Channel (E-DCH) operation, adopting HARQ protocol, Scheduling Information (SI) may be transmitted. The Scheduling Information, or data, in UMTS is similar to a combined PHR (Power HeadroomReport) and BSR (Buffer Status Report) in E-UTRA, and may provide information about the UE's current transmission status (e.g. available transmission power, total amount of data queued up for transmission, highest priority logical channel etc.).

An SI transmission by the UE on the uplink may be triggered by a particular event (e.g. new data arriving) or by a periodic timer, for example.

Hybrid Automated Repeat reQuest (HARQ) processes can be allocated for a Signalling Radio Bearer (SRB). According to the Standard, SI can be transmitted in HARQ E-DCH operation on any HARQ (s3GPP TS 25.321 section 11.8.1.6). Thus, SI can be transmitted on the Hybrid Automated Repeat reQuest (HARQ) process that is allocated for a Signalling Radio Bearer (SRB).

In this case, the SRB may include it may experience retransmission. This can delay time critical uplink SRB message transmission, for instance, up to 128 ms.

During this timeframe, the considered UE is blocked to send any essential uplink radio resource management related messages like Active Set Update Complete, Measurement Report, Radio Bearer Reconfiguration Complete. Not being able to send such messages might eventually cause a call drop due to radio link or re-configuration failure.

The network may allocate one or more UL HARQ processes for SRB traffic via a signalled bitmap. This means that SRB traffic shall be restricted to being sent only on those allocated HARQ processes, but normal data traffic, etc, may also use those allocated HARQ processes (as well as the non-SRB-allocated HARQ processes).

Although more than one HARQ process can be allocated for SRB traffic, generally only one SRB HARQ process is assigned by the network.

As an example, if a stand-alone SI transmission is made (i.e. SI is not piggy-backed onto a data transmission), then up to 8 HARQ (re)transmissions of this information can be required in the worst-case. This blocks the corresponding HARQ process from being used for transmitting any other information until the configured maximum number of transmissions has been reached. As noted above, this could represent a time period of up to 128 ms.

In 25.321 v10.5.0 the following section indicates when SI is triggered: 11.8.1.6 Scheduling Information reporting. This document uses the text "if there was a scheduled transmission (see NOTE 2) in the previous TTI of the HARQ process" in addition to discussing about scheduling of data on a HARQ process.

If only one HARQ process is allocated for SRB traffic and an SI transmission is made on that same HARQ process, then any time-critical SRB traffic could be blocked from being sent for up to 128 ms (which can lead to a higher probability of a call drop).

Additionally, typically the fact that SI needs a higher number of retransmissions to be properly delivered is an indication that the UE is in the middle of a configuration change (i.e. activeSetUpdate) where the current cell signal strength is deteriorating (hence need more re-transmissions). In such a scenario the need for timely delivery of mobility messages on SRB like *measurementReport, activesetUpdateComplete* or *radioBearerReconfigurationComplete* is more critical compared to a stationary scenario. During High Speed Uplink Packet Access (HSUPA) operation, it is common to map multiple Radio Bearers (RBs) on to the same transport channel (E-DCH) on the uplink. In such configuration, Radio Access Bearers (RABs) carrying the user data as well as Signalling Radio Bearers (SRBs) delivering radio control messages are mapped on to a single transport channel.

In some settings, the network prefers to allocate a certain HARQ process to non-scheduled transmissions; which is typically used for signalling radio bearers (SRBs). This can be done, for example, by setting "ms2- NonSchedTransmGrantHARQAlloc" IE in the control message configuring E-DCH operation. The following is an example of a network configuration:

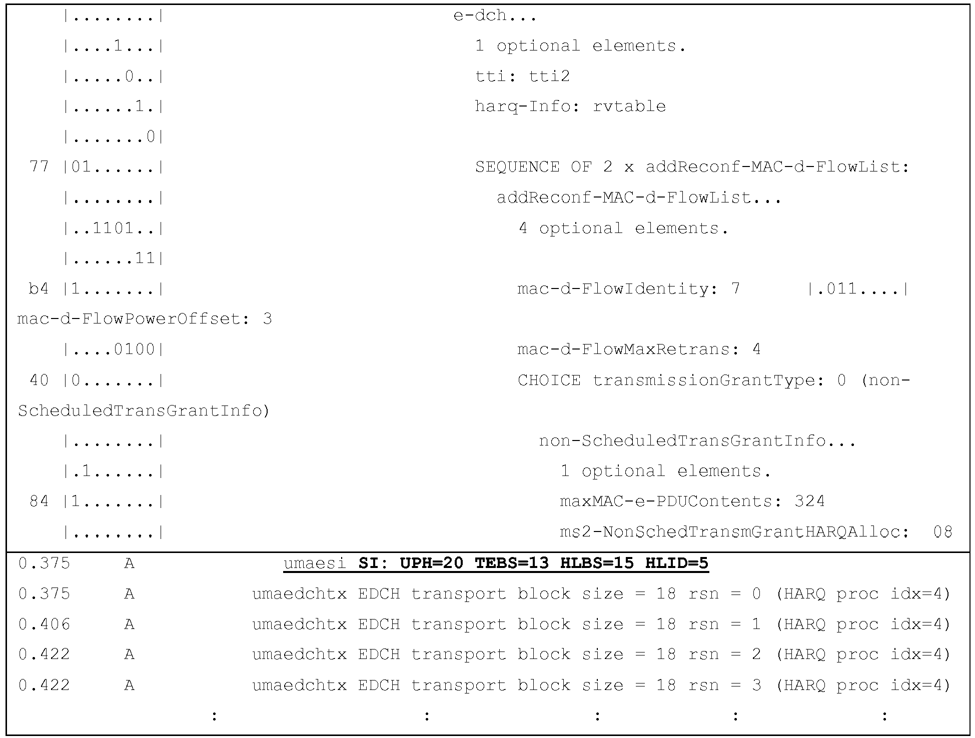

As it could be seen in such scenario HARQ process #4 is allocated for SRB transmission. The problematic scenario is also illustrated in the Table above where SI transmission went into retransmission loop. In such scenario the SRB transmission is delayed ∼50 ms already (considering only 3 transmissions). According to standards (3GPP TS 25.321) the maximum SI retransmission is 7, which makes total transmission of 8 (initial transmission + re-transmissions).

Considering a HARQ process cycle length of 16 ms, maximum SI re-transmission can span 128 ms and block the considered HARQ process for this duration.

### Present approach

According to standards, SI can be transmitted on any HARQ (3GPP TS 25.321 section 11.8.1.6). So according to the present approach, the device takes into consideration the fact that some HARQ processes are allocated for non-scheduled (SRB) transmission, and schedules SI transmission dependent upon HARQ allocation.

For example, SI transmission is not scheduled on HARQ processes are allocated for non-scheduled (SRB) transmission.

The probability of considered HARQ being occupied for extended duration of time will be reduced. Such reduction will decrease the call drops. SI re-transmission is expected to happen quite frequently especially during serving cell change. Even though E-DCH utilizes soft handover on the uplink, in case of standalone scheduling requests, the transmission is repeated until an ACK is received from the radio link set containing the serving cell (3GPP TS 25.321 section 11.8.1.1.2).

### Example 1

According to example 1, in summary, SI transmission is not scheduled on HARQ processes are allocated for non-scheduled (SRB) transmission.

In further detail, in a data transmission scheme in E-DCH, a HARQ process is used as an error control method.

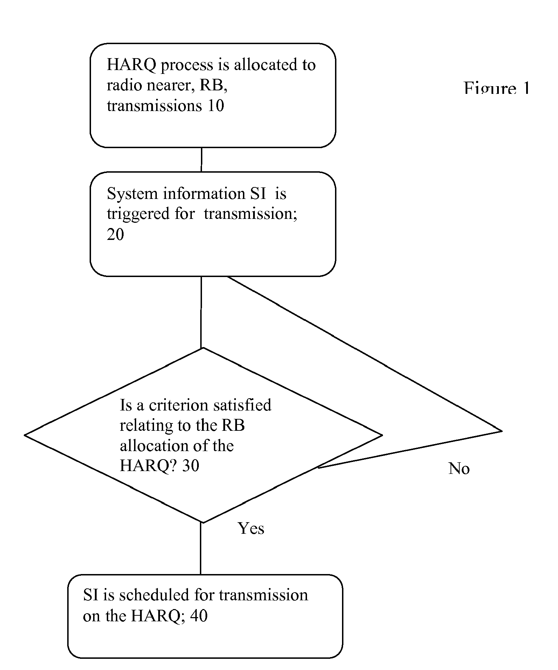

As illustrated in figure 1, in step 10, the HARQ processes being used are allocated to radio bearer transmissions. In one aspect, this may be done by setting "ms2-NonSchedTransmGrantHARQAlloc" IE in the control message configuring E-DCH operation. For instance, a first HARQ process may be allocated to non-scheduled SRB transmission.

In step 20, an SI transmission is triggered. This may be a standalone SI transmission, or one that is piggy-backed into a data transmission

According to this example, the SI in step 30, is scheduled dependent upon a determination of whether, for a given HARQ process, a criterion is satisfied relating to RB (or logical channel) allocation of the HARQ process.

If the criterion is satisfied, then the SI is transmitted on (for/with) that HARQ process, in step 40. The UE in one aspect determination of whether the criterion is satisfied is determined from an IE ms2 NonSchedTransmGrantHARQAlloc, received in a control message.

If it is not satisfied then a further determination is made of whether, for another give HARQ process, the criterion is satisfied (loop step 30). In the event that no HARQ process can be identified that satisfies the criterion, then the SI will not be sent in one aspect. In another aspect, the SI is sent on any HARQ.

In this example, the criterion is whether the HARQ process is not allocated for non-scheduled SRB transmission. In summary, SI transmission is not scheduled on HARQ processes that are allocated for non-scheduled SRB transmission.

The SI in step 40 is then sent on its scheduled HARQ process.

According to this example, the probability of the considered HARQ being occupied for extended duration of time will be reduced. Such reduction will decrease the call drops. SI re-transmission is expected to happen quite frequently especially during serving cell change. Even though E-DCH utilizes soft handover on the uplink, in case of standalone scheduling requests, the transmission is repeated until an ACK is received from the radio link set containing the serving cell (3GPP TS 25.321 section 11.8.1.1.2).

In the event of a collision between a triggered (stand-alone) SI transmission and the UL HARQ process allocated for SRB traffic, this example may delay the SI transmission by one TTI (2 ms) (assuming only one HARQ process is allocated for SRB) in order to use a different UL HARQ process (so as not to potentially interfere with any SRB traffic). As noted above, SI retransmission may occur even more frequently during serving EDCH radio link change. At the same time (i.e. during a serving E-DCH radio link change), there may also be increased SRB signalling traffic (e.g. due to active set updates, measurement reports, radio link configuration messages etc). The application of the example may therefore be even more beneficial to reducing the probability of dropping a call in such a situation.

Additionally the operation of E-DCH by itself may require more signalling activity to control. For instance intra-frequency measurements like Event 1J is only applicable for E-DCH operation; increasing the utilization of the SRB tunnel.

### Detecting implementaion

Detecting the implementation of such algorithm on wireless devices is straight forward. All the test equipments supporting E-DCH feature provides logging tool to monitor the scheduling information and which HARQ it is transmitted in. Whether the considering algorithm is used in the mobile device or not can be verified by activating E-DCH with " ms2- NonSchedTransmGrantHARQAlloc " and observe SI transmission from the test equipment side.

The proposed example may be beneficial when only one UL HARQ process is allocated for SRB traffic, which may be normal configuration in many commercial networks.

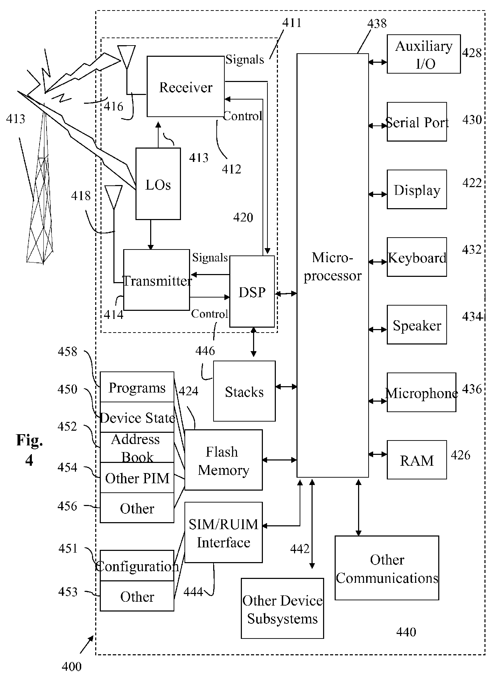

Figure 4 shows an overview of a network and a UE device. Clearly in practice there may be many UE devices operating with the network but, for the sake of simplicity, Figure 4 only shows a single UE device 400. For the purposes of illustration, Figure 4 also shows a network 419 having a few components. It will be clear to a person skilled in the art that in practice a network will include far more components than those shown.

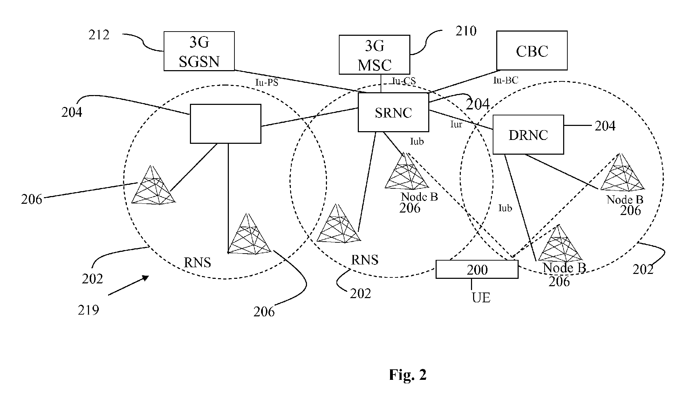

Figure 2 shows an overview of the radio access network 219 (e.g. E-UTRAN) used in a mobile communications system. The network 219 as shown in Figure 2 comprises three Radio Network Subsystems (RNS) 2. Each RNS has a Radio Network Controller (RNC) 4. Each RNS 4 has one or more Node B 6 which are similar in function to a Base Transmitter Station of a GSM radio access network. User Equipment UE 600 may be mobile within the radio access network. Radio connections (indicated by the straight dotted lines in Figure 2) are established between the UE and one or more of the Node Bs in the network 219.

The radio network controller controls the use and reliability of the radio resources within the RNS 2. Each RNC may also connected to a 3G mobile switching centre 10 (3G MSC) and a 3G serving GPRS support node 12 (3G SGSN).

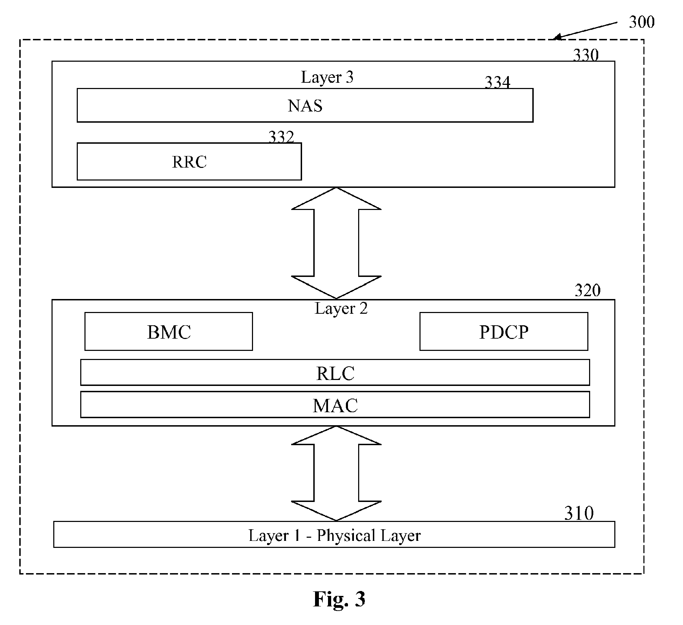

Figure 3 is a block diagram illustrating an embodiment of a protocol stack provided in a UE. A Radio Resource Controller (RRC) block 332 is a sub layer of Layer 3 330 of a protocol stack 300. The RRC 332 exists in the control plane only and provides an information transfer service to the non-access stratum NAS 334. The RRC 332 is responsible for controlling the configuration of radio interface Layer 1 310 and Layer 2 320. When the network wishes to change the UE configuration it will issue a message to the UE containing a command to invoke a specific RRC procedure. The RRC layer 332 of the UE decodes this message and initiates the appropriate RRC procedure. Generally when the procedure has been completed (either successfully or not) then the RRC sends a response message to the network (via the lower layers) informing the network of the outcome. It should be noted that there are a few scenarios where the RRC will not issue a response message to the network and, in those cases the RRC need not and does not reply.

The strategies in mobile telecommunications system user equipment as discussed above with reference to the drawings may be implemented by the RRC block 332.

Turning now to Figure 4, Figure 4 is a block diagram illustrating a mobile device, which can act as a UE and co-operate with the apparatus and method of Figure 1, and which is an exemplary wireless communication device. Mobile station 400 is preferably a two-way wireless communication device having at least voice and data communication capabilities. Mobile station 400 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station 400 is enabled for two-way communication, it will incorporate a communication subsystem 411, including both a receiver 412 and a transmitter 414, as well as associated components such as one or more, preferably embedded or internal, antenna elements 416 and 416, local oscillators (LOs) 413, and processing means such as a processing module such as a digital signal processor (DSP) 420. As will be apparent to those skilled in the field of communications, the particular design of the communication subsystem 411 will be dependent upon the communication network in which the device is intended to operate. For example, mobile station 400 may include a communication subsystem 411 designed to operate within the Mobitex™ mobile communication system, the DataTAC™ mobile communication system, GPRS network, UMTS network, EDGE network, LTE network etc.

Network access requirements will also vary depending upon the type of network 402. For example, in the Mobitex and DataTAC networks, mobile station 400 is registered on the network using a unique identification number associated with each mobile station. In UMTS and GPRS networks, however, network access is associated with a subscriber or user of mobile station 400. A GPRS mobile station therefore requires a subscriber identity module (SIM) card in order to operate on a GPRS network. Without a valid SIM card, a GPRS mobile station will not be fully functional. Local or non-network communication functions, as well as legally required functions (if any) such as "911" emergency calling, may be available, but mobile station 400 will be unable to carry out any other functions involving communications over the network 402. The SIM interface 444 is normally similar to a card-slot into which a SIM card can be inserted and ejected like a diskette or PCMCIA card. The SIM card has memory and may hold many key configuration 451, and other information 453 such as identification, and subscriber related information.

When required network registration or activation procedures have been completed, mobile station 400 may send and receive communication signals over the network 402. Signals received by antenna 416 through communication network 402 are input to receiver 412, which may perform such common receiver functions as signal amplification, frequency down conversion, filtering, channel selection and the like, and in the example system shown in Figure 4, analog to digital (A/D) conversion. A/D conversion of a received signal allows more complex communication functions such as demodulation and decoding to be performed in the DSP 420. In a similar manner, signals to be transmitted are processed, including modulation and encoding for example, by DSP 420 and input to transmitter 414 for digital to analog conversion, frequency up conversion, filtering, amplification and transmission over the communication network 402 via antenna 416. DSP 420 not only processes communication signals, but also provides for receiver and transmitter control. For example, the gains applied to communication signals in receiver 412 and transmitter 414 may be adaptively controlled through automatic gain control algorithms implemented in DSP 420.

Mobile station 400 preferably includes processing means such as a microprocessor 436 which controls the overall operation of the device. Communication functions, including at least data and voice communications, are performed through communication subsystem 411. Microprocessor 436 also interacts with further device subsystems such as the display 422, flash memory 424, random access memory (RAM) 426, auxiliary input/output (I/O) subsystems 426, serial port 430, keyboard 432, speaker 434, microphone 436, a short-range communications subsystem 440 and any other device subsystems generally designated as 442.

Some of the subsystems shown in Figure 4 perform communication-related functions, whereas other subsystems may provide "resident" or on-device functions. Notably, some subsystems, such as keyboard 432 and display 422, for example, may be used for both communication-related functions, such as entering a text message for transmission over a communication network, and device-resident functions such as a calculator or task list.

Operating system software used by the microprocessor 436 is preferably stored in a persistent store such as flash memory 424, which may instead be a read-only memory (ROM) or similar storage element (not shown). Those skilled in the art will appreciate that the operating system, specific device applications, or parts thereof, may be temporarily loaded into a volatile memory such as RAM 426. Received communication signals may also be stored in RAM 426.

As shown, flash memory 424 can be segregated into different areas for both computer programs 456 and program data storage 450, 452, 454 and 456. These different storage types indicate that each program can allocate a portion of flash memory 424 for their own data storage requirements. Microprocessor 434, in addition to its operating system functions, preferably enables execution of software applications on the mobile station. A predetermined set of applications that control basic operations, including at least data and voice communication applications for example, will normally be installed on mobile station 400 during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 402. In a preferred embodiment, the PIM data items are seamlessly integrated, synchronized and updated, via the wireless network 402, with the mobile station user's corresponding data items stored or associated with a host computer system. Further applications may also be loaded onto the mobile station 400 through the network 402, an auxiliary I/O subsystem 426, serial port 430, short-range communications subsystem 440 or any other suitable subsystem 442, and installed by a user in the RAM 426 or preferably a non-volatile store (not shown) for execution by the microprocessor 436. Such flexibility in application installation increases the functionality of the device and may provide enhanced on-device functions, communication-related functions, or both. For example, secure communication applications may enable electronic commerce functions and other such financial transactions to be performed using the mobile station 400.

In a data communication mode, a received signal such as a text message or web page download will be processed by the communication subsystem 411 and input to the microprocessor 436, which preferably further processes the received signal for output to the display 422, or alternatively to an auxiliary I/O device 426. A user of mobile station 400 may also compose data items such as email messages for example, using the keyboard 432, which is preferably a complete alphanumeric keyboard or telephone-type keypad, in conjunction with the display 422 and possibly an auxiliary I/O device 426. Such composed items may then be transmitted over a communication network through the communication subsystem 411.

For voice communications, overall operation of mobile station 400 is similar, except that received signals would preferably be output to a speaker 434 and signals for transmission would be generated by a microphone 436. Alternative voice or audio I/O subsystems, such as a voice message recording subsystem, may also be implemented on mobile station 400. Although voice or audio signal output is preferably accomplished primarily through the speaker 434, display 422 may also be used to provide an indication of the identity of a calling party, the duration of a voice call, or other voice call related information for example.

Serial port 430 in Figure 4, would normally be implemented in a personal digital assistant (PDA)-type mobile station for which synchronization with a user's desktop computer (not shown) may be desirable, but is an optional device component. Such a port 430 would enable a user to set preferences through an external device or software application and would extend the capabilities of mobile station 400 by providing for information or software downloads to mobile station 400 other than through a wireless communication network. The alternate download path may for example be used to load an encryption key onto the device through a direct and thus reliable and trusted connection to thereby enable secure device communication.

Other communications subsystems 440, such as a short-range communications subsystem, is a further optional component which may provide for communication between mobile station 400 and different systems or devices, which need not necessarily be similar devices. For example, the subsystem 440 may include an infrared device and associated circuits and components or a Bluetooth™ communication module to provide for communication with similarly enabled systems and devices.

When mobile device 400 is used as a UE, protocol stacks 446 include processes for operating as described in mobile telecommunications system user equipment.

### EXTENSIONS AND ALTERNATIVES

In the foregoing specification, the invention has been described with reference to specific embodiments thereof. It will, however, be evident that various modifications and changes may be made thereto without departing from the scope of the technique. The specification and drawings are, accordingly, to be regarded in an illustrative rather than a restrictive sense.

It is to be noted that the methods as described have actions being carried out in a particular order. However, it would be clear to a person skilled in the art that the order of any actions performed, where the context permits, can be varied and thus the ordering as described herein is not intended to be limiting.

It is also to be noted that where a method has been described it is also intended that protection is also sought for a device arranged to carry out the method and where features have been claimed independently of each other these may be used together with other claimed features.

Furthermore it will be noted that the apparatus described herein may comprise a single component such as a UE or UTRAN or other user equipment or access network components, a combination of multiple such components for example in communication with one another or a sub-network or full network of such components.

Embodiments have been described herein in relation to 3GPP specifications. However the method and apparatus described are not intended to be limited to the specifications or the versions thereof referred to herein but may be applicable to future versions or other specifications.

A portion of the disclosure of this patent document contains material which is subject to copyright protection. The copyright owner has no objection to the facsimile reproduction by anyone of the patent document or patent disclosure, as it appears in the Patent and Trademark Office patent file or records, but otherwise reserves all copyright rights whatsoever.

## Claims

1. A method for scheduling data transmission, the transmission comprising an error control process, the method comprising, in a user equipment:
scheduling data transmission on the error control process if a criterion is satisfied dependent on a radio bearer allocation of the error control process.

2. The method of claim 1, in which the data comprises scheduling data.

3. The method of claim 1 or claim 2, in which the transmission is part of a High Speed Uplink Packet Access (HSUPA) operation, on an uplink enhanced dedicated channel, E-DCH.

4. The method of any one of claims 1 to 3, in which the error control process comprises a Hybrid Automated ReQuested, HARQ, process.

5. The method of any one of claim 1 to 4 in which the criterion comprises the error control process not being allocated to a signalling radio bearer, SRB.

6. The method of claim 1, in which the error control process comprises a HARQ process, the data comprises system information, and in which the criterion comprises the error control process not being allocated for non-scheduled SRB transmission.

7. The method of any one of claims 1 to 6 in which the error control process is allocated dependent upon an information element, IE, ms2 NonSchedTransmGrantHARQAlloc, received in a control message.

8. The method of any one of claims 1 to 7 in which whether the criterion is satisfied is determined from an IE ms2 NonSchedTransmGrantHARQAlloc, received in a control message.

9. The method of any one of claims 1 to 7 in which multiple Radio Bearers are mapped on to a same transport channel on an uplink.

10. A wireless telecommunications device comprising:
a processor; and
a memory having stored therein one or more routines executable by the processor, the one or more routines being adapted to operate according to the method of any of claims 1 to 9.

11. A computer-readable medium having computer-executable instructions adapted to cause a device to perform the method of any of claims 1 to 9.
